# EUROPEAN PATENT SPECIFICATION

(11) **EP 0 352 760 B1**
(45) Date of publication and mention of the grant of the patent: **31.03.1993**
(21) Application number: 89113739.0
(22) Date of filing: 25.07.1989
(51) Int. Cl.: B60K 13/02

(54) **Structure for mounting air cleaner of engine**
Anordnung zum Einbau eines Motorluftfilters
Structure pour monter un filtre à air sur un engin

(30) Priority: 29.07.1988 JP 101202/88 U; 07.06.1989 JP 67187/89 U
(43) Date of publication of application: 31.01.1990
(73) Proprietor: Mazda Motor Corporation, Aki-gun Hiroshima-ken (JP)
(72) Inventor: Fukuda, Hirotaka, Hiroshima-shi, Hiroshima-ken (JP); Kondoh, Koichi, Hiroshima-shi, Hiroshima-ken (JP); Tsuchida, Tsuyoshi, Yamaguchi-ken (JP)
(74) Representative: Lange, Gerd, Dipl.-Ing.

(56) References cited:
- DE-A- 2 138 950
- US-A- 3 802 169
- US-A- 4 354 458
- US-A- 4 533 012
- US-A- 4 685 531

## Description

### Background of the Invention

### (a) Field of the Invention

The present invention relates to a structure for mounting an air cleaner near an engine.

### (b) Description of the Prior Art

It is sometimes difficult to mount an air cleaner on an engine. For example, in an engine with a fuel injection system, the fuel injector system and an air duct are mounted on the engine and the air cleaner is mounted on the vehicle body. The air cleaner and duct which introduces fresh air to it are mounted on the vehicle body and engine respectively using a rubber mounting and are connected through a rubber hose, as disclosed by the Japanese Utility Model Laying Open Gazette No. 63-14428.

In another application, an air cleaner is arranged in the empty space above the transmission to reduce the size required for the engine compartment, as disclosed by the Japanese Utility Model Publication Gazette No. 61-28041. Here, engine vibration is prevented from being transferred to the vehicle body because the air cleaner is mounted on the engine. However, the air cleaner receives vibration from the engine and when this vibration frequency coincides with the natural frequency of the air cleaner, the air cleaner resonates, possibly reducing the reliability of the air cleaner.

In a specific example, an air flow meter used to control engine operation is provided on the air cleaner. Where this air flow meter is a hot wire type system, the fine hot wire could break due to the vibration of the engine. In an air cleaner made of a resin, the air cleaner resonates when the engine vibration is approximately 5000 rpm and this could cause the hot wire to break.

The configuration of the air cleaner can be changed, but this only shifts the resonance point and does not substantially solve the air cleaner resonance problem.

### Summary of the Invention

It is an object of the present invention to prevent the resonance of an air cleaner by devising a support structure for the air cleaner when the air cleaner is mounted near an engine and a transmission.

In order to attain the aforementioned object, according to the present invention, the air cleaner is attached so that it is supported by both the engine and the transmission.

In the above construction in accordance with the present invention, vibration is transferred from both engine and transmission to the air cleaner.

In this case, since the vibration frequencies of the engine and the transmission are different, the frequency of the applied vibration force does not coincide with the natural frequency of the air cleaner, with the result that air cleaner resonance is prevented and reliability is improved.

### Brief Description of the Drawings

The nature and advantage of the present invention will be made more apparent from the following description made with reference to the accompanying drawings, in which:
Fig. 1 is a perspective view showing an engine compartment of a motor vehicle.
Fig. 2 is a top view showing a structure for mounting an air cleaner.
Fig. 3 is a front view showing the same.
Fig. 4 is an exploded perspective view showing how the structure for mounting a mounting bracket is attached.

### Detailed Description of the Preferred Embodiment

Embodiments of the present invention will be explained below with reference to the accompanying drawings.

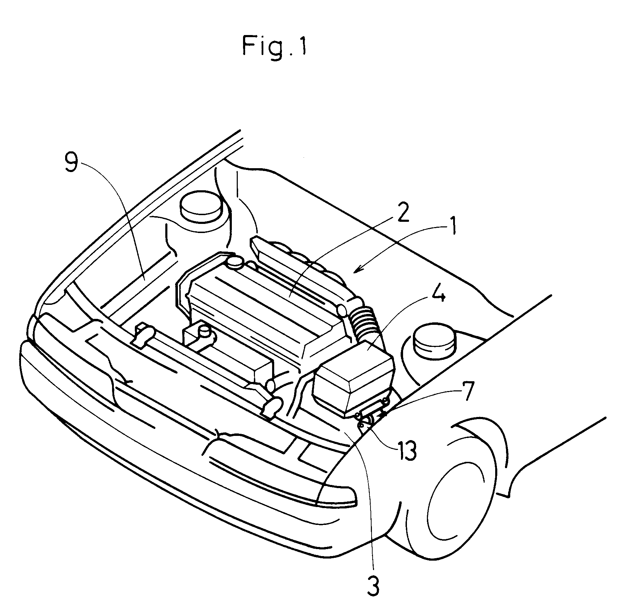

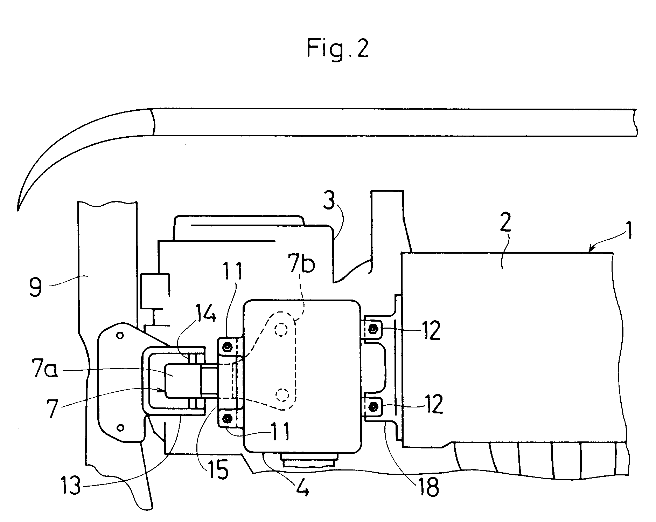

In Figs. 1 through 3, reference numeral 1 designates a power plant comprising an engine 2 and a transmission 3. The engine 2 is arranged such that in the engine compartment, a crank shaft parallels the vehicle bumper (a horizontal direction in Fig. 2). Reference numeral 4 designates an air cleaner which is arranged in a space adjacent to a transverse sides of the engine 2 and above the transmission 3. Reference numeral 5 designates a differential gear housing connected to the transmission 3. The transmission 3 has a flange 3a on its one end connected to the engine 2 along one of the transverse sides of the engine 2 by a bolt 6 and an upper end part on the other side connected to a frame member 9 of a vehicle body through a first bracket 7. This frame member 9 extends in a longitudinal direction of the vehicle (a vertical direction in Fig. 2) and forms one part of the side wall of the engine compartment.

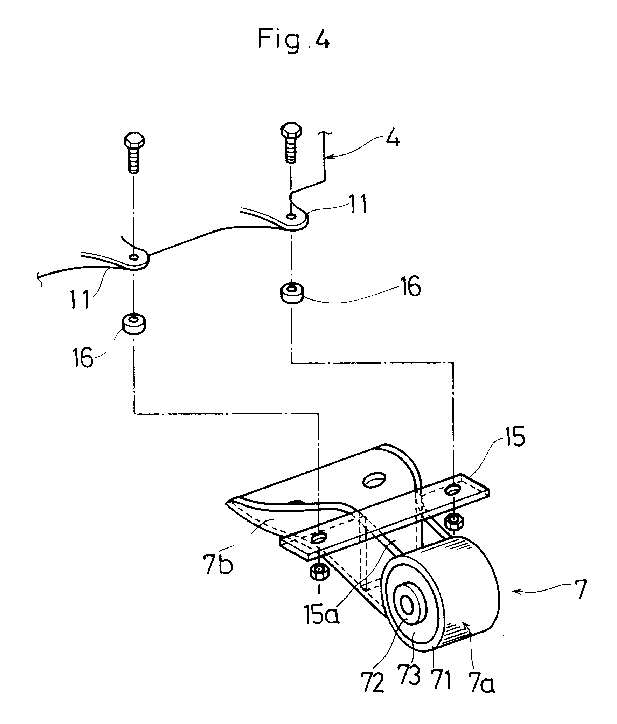

Referring to Fig. 4, the first bracket 7 comprises a cylindrical member 7a and a supporting member 7b having a U-shaped longitudinal section which is connected to the cylindrical member 7a and extends from the cylindrical member 7a toward the engine. The cylindrical member 7a comprises an external cylindrical member 71, an internal cylindrical member 72 provided in the external cylindrical member 71 so as to be concentric with the external cylindrical member 71 and a cylindrical rubber member 73 intervening between the two cylindrical members 71 and 72. Referring now to Fig. 2, a second bracket 13 having a U-shaped cross section is fixed in the frame member 9. The cylindrical member 7a of the first bracket 7 is supported on the second bracket 13 by a connecting shaft 14 inserted into the internal cylindrical member 72. In addition, the supporting member 7b of the first bracket 7 is connected to the upper surface of the transmission 3 by bolt.

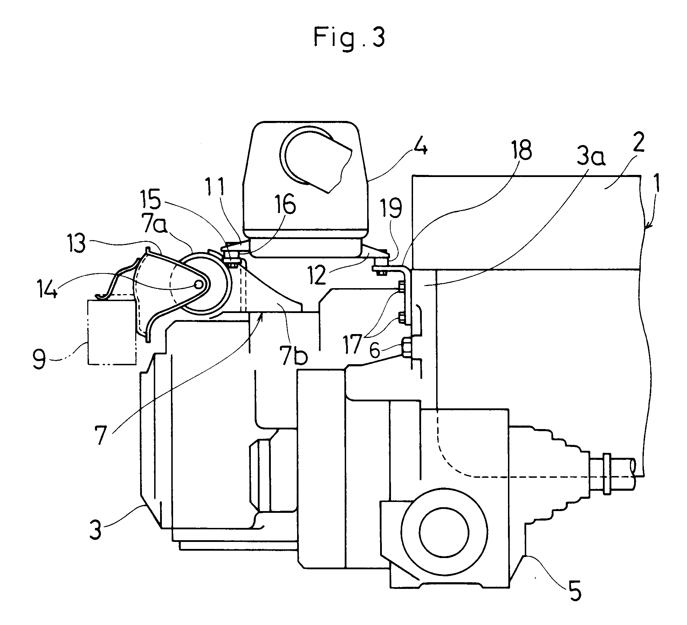

The air cleaner 4 comprises a hot wire type air flow meter. In addition, as shown in Figs. 2 and 3, left flanges 11 project from the lower left of the air cleaner and right flanges 12 project from the lower right of the air cleaner.

A left supporting bracket 15 extending in a longitudinal direction of the vehicle body is welded to the supporting member 7b of the first bracket 7 as shown in Fig. 4. More specifically, the left support bracket 15 has a part 15a extending in a vertical direction and a side end of this part 15a is welded to the supporting member 7b. The left flanges 11 are mounted on the upper surface of the left supporting bracket 15 by bolts through a rubber elastic mounting member 16. More specifically, the air cleaner 4 is mounted to the transmission 3 by the flanges 11 through the left supporting bracket 15 and the mounting bracket 7.

Referring to Figs. 2 and 3, a right supporting bracket 18 is mounted on the engine 2. The bracket 18 is connected to the engine 2 by insertion of bolts 17 through the flange 3a of the transmission 3. The right flanges 12 are mounted on the upper surface of the right supporting bracket 18 by bolts through a rubber mounting member 19. More specifically, the air cleaner 4 is mounted on the engine 2 by the flanges 12 through the right supporting bracket 18.

Therefore, in the aforementioned structure for mounting the air cleaner 4, the vibration of the engine 2 is transferred to the air cleaner 4 through the right supporting bracket 18 while the motor vehicle is running. Also, the vibration of the transmission 3 is transferred to the air cleaner 4 through the left supporting bracket 15 and the first bracket 7. Since the vibration of the engine 2 and the vibration of the transmission 3 have different vibration frequency characteristics, the frequency of the applied vibration force does not coincide with the natural frequency of the air cleaner 4 with the result that resonance of the air cleaner 4 is prevented and the reliability of the air cleaner 4 is improved.

The power plant 1 generates power plant bending (bending vibration). The air cleaner 4 is supported on the center section of the power plant 1 through the right supporting bracket 18 and supported on the end part of the power plant 1 through the left supporting bracket 15. Therefore, even when the power plant bending is generated, the air cleaner is prevented from receiving the vibration of the power plant 1 and resonating because the vibration input to the air cleaner 4 through both supporting brackets 15 and 18 have different characteristics.

Since the air cleaner 4 does not resonate in this way, the hot wire is prevented from breaking. As a result, it is possible to accurately measure a quantity of intake air by the air flow meter and normally control the engine 2.

In addition, since the air cleaner 4 is connected to the engine 2 and the transmission 3, the distance between supporting points of the air cleaner 4 is less than that required when the air cleaner 4 is connected to the engine 2 and the frame member 9, with the result that the air cleaner can be more stably mounted. Furthermore, since the air cleaner 4 is positioned on the transmission 3 and the distance between the supporting points is short, it is possible to reduce the height of the hood by effectively using a limited space in the engine compartment.

The present invention is not limited to the structure in the aforementioned embodiment. Although the air cleaner is support at two places in the above embodiment, it may be supported on the power plant or the vehicle body at another place in addition to these two places in order to increase mounting stability.

## Claims

1. A mounting assembly for mounting an air cleaner (4) of an automobile engine to an automobile power plant (1) including an engine (2) and a transmission (3) characterized in that the air cleaner (4) is mounted to the engine (2) by first mounting means (12, 18), and further mounted to the transmission (3) by second mounting means (7, 11, 15).

2. The assembly of claim 1 further comprising frame member mounting means for connecting said second mounting means (11) additionally to the vehicle body (9), said frame member mounting means comprising first bracket means (7) for connecting said frame member means to said second mounting means (11), second bracket means (13) for connecting said frame member mounting means to the vehicle body (9), and bracket connecting means (14) for connecting said first bracket means (7) to said second bracket means (13).

3. The assembly of claim 2 wherein said second mounting means (11) is connected to said first bracket means (7) through elastic mounting members (16).

4. The assembly according to claim 2 wherein said bracket connecting means comprises a support member means (7b) connected to cylindrical member means (7a), said support member means (7b) being U-shaped and being mounted to said first bracket means (7) and said cylindrical member means (7a) comprising an external cylinder (71), a concentric internal cylinder (72) and rubber means (73) separating said external cylinder (71) and said internal cylinder (72) and being connected to said second bracket means (13).

5. The assembly of claim 4 wherein said second mounting means comprising a flange (11) and wherein said first bracket means (7) is connected to said flange (11) and to the upper portion of said support member means (7b).

6. The assembly according to anyone of the preceding claims characterized by said engine (2) having a crank shaft, said crank shaft being mounted parallel to the front bumper of the automobile, and said transmission (3) being connected to said engine (2) along one of the transverse sides of said engine (2), said air cleaner being mounted such that it is located adjacent to said transverse side of said engine (2) and above said transmission (3).

7. The assembly according to anyone of the preceding claims characterized in said first mounting means (12) being connected through a supporting bracket (18) to where said engine (2) is connected to said transmission (3).

8. The assembly according to claim 7 wherein said first mounting means (12) is mounted to said supporting bracket (18) through elastic mounting members (19).

## Patentansprüche

1. Anordnung zum Einbau eines Luftfilters (4) eines Fahrzeugmotors an das Fahzeugtriebwerk (1) mit einem Motor (2) und einem Getriebe (3), dadurch gekennzeichnet, daß der Luftfilter (4) an dem Motor (2) durch eine erste Halteeinrichtung (12, 18) und außerdem an dem Getriebe (3) durch eine zweite Halteeinrichtung (7, 11, 15) befestigt ist.

2. Anordnung nach Anspruch 1, dadurch gekennzeichnet, daß eine Rahmenmontageeinrichtung zur zusätzlichen Verbindung der zweiten Halteeinrichtung (11) mit der Fahrzeugkarosserie (9) vorgesehen ist, wobei die Rahmenmontageeinrichtung einen ersten Träger (7) umfaßt, zur Verbindung des Rahmenelementes mit der zweiten Montageeinrichtung (11), einen zweiten Träger (13) zur Verbindung der Rahmenmontageeinrichtung mit der Fahrzeugkarosserie (9) sowie eine Trägerverbindungseinrichtung (14) zum Anschluß des ersten Trägers (7) an den zweiten Träger (13).

3. Anordnung nach Anspruch 2, dadurch gekennzeichnet, daß die zweite Montageeinrichtung (11) an den ersten Träger (7) über ein elastisches Montageelement (16) angeschlossen ist.

4. Anordnung nach Anspruch 2, dadurch gekennzeichnet, daß die Trägerverbindungseinrichtung ein Stützelement (7b) umfaßt, welches an ein zylindrisches Element (7a) angeschlossen ist, wobei das Stützelement (7b) U-förmig ausgebildet und an dem ersten Träger (7) gehalten ist, und das zylindrische Element (7a) einen äußeren Zylinder (71), einen konzentrischen inneren Zylinder (72) und ein Gummielement (73), welches den äußeren Zylinder (71) und den inneren Zylinder (72) voneinander trennt und an den zweiten Träger (13) angeschlossen ist, umfaßt.

5. Anordnung nach Anspruch 4, dadurch gekennzeichnet, daß die zweite Halteeinrichtung einen Flansch (11) umfaßt, wobei der erste Träger (7) an den Flansch (11) und dem oberen Teil der Halteeinrichtung (7b) angeschlossen ist.

6. Anordnung nach einem der vorangehenden Ansprüche, dadurch gekennzeichnet, daß der Motor (2) mit einer Kurbelwelle versehen ist, wobei die Kurbelwelle parallel zur vorderen Stoßstange des Fahrzeuges angeordnet ist und das Getriebe (3) an den Motor (2) entlang einer der Querseiten des Motors (2) angeschlossen ist, wobei der Luftfilter derart montiert ist, daß er sich, angrenzend an eine der Querseiten des Motors (2) und oberhalb des Getriebes (3), befindet.

7. Anordnung nach einem der vorangehenden Ansprüche, dadurch gekennzeichnet, daß die erste Halteeinrichtung (12) über einen Stützträger (18) dort befestigt ist, wo der Motor (2) an das Getriebe (3) angeschlossen ist.

8. Anordnung nach Anspruch 7, dadurch gekennzeichnet, daß die erste Halteeinrichtung (12) an dem Stützträger (18) über ein elastisches Montagelement (19) gehalten ist.

## Revendications

1. Un moyen d'assemblage pour monter un épurateur d'air (4) d'un moteur d'automobile sur un groupe motopropulseur d'automobile (1) comprenant un moteur (2) et une transmission (3), caractérisé en ce que l'épurateur d'air (4) est monté sur le moteur (2) par des premiers moyens de montage (12, 18) et est en outre monté sur la transmission (3) par des seconds moyens de montage (7, 11, 15).

2. L'assemblage selon la revendication 1, comportant en outre des moyens de montage d'organe de châssis pour relier lesdits seconds moyens de montage (11) additionnellement à la caisse (9) du véhicule, lesdits moyens de montage d'organe de châssis comprenant des premiers moyens de console (7) pour relier lesdits moyens d'organe de châssis auxdits se-. conds moyens de montage (11), des seconds moyens de console (13) pour relier lesdits moyens de montage d'organe de châssis à la caisse (9) du véhicule, et des moyens de liaison de console (14) pour relier lesdits premiers moyens de console (7) auxdits seconds moyens de console (13).

3. L'assemblage selon la revendication 2, dans lequel lesdits seconds moyens de montage (11) sont reliés auxdits premiers moyens de console (7) par des organes de montage élastique (16).

4. L'assemblage selon la revendication 2, dans lequel lesdits moyens de liaison de console comportent des moyens d'organe de support (7b) reliés à des moyens cylindriques (7a), lesdits moyens d'organe de support (7b) présentant une forme en U et étant montés sur lesdits moyens de console (7) et lesdits moyens cylindriques (7a) comprenant un cylindre extérieur (71), un cylindre intérieur concentrique (72) et des moyens élastomères (73) séparant ledit cylindrique extérieur (71) et ledit cylindre intérieur (72) et reliés auxdits seconds moyens de console (13).

5. L'assemblage selon la revendication 4, dans lequel lesdits seconds moyens de montage comportent une patte (11) et dans lequel lesdits premiers moyens de console (7) sont reliés à ladite patte (11) et à la partie supérieure desdits moyens de support (7b).

6. L'assemblage selon l'une quelconque des revendications précédentes, caractérisé en ce que ledit moteur (2) comporte un vilebrequin, ledit vilebrequin étant monté parallèle au pare-choc avant de l'automobile, et ladite transmission (3) étant reliée audit moteur (2) sur l'un des côtés transversaux dudit moteur (2), ledit épurateur d'air étant monté de telle façon qu'il soit disposé adjacent audit côté transversal dudit moteur (2) et au-dessus de ladite transmission (3).

7. L'assemblage selon l'une quelconque des revendications précédentes, caractérisé en ce que lesdits premiers moyens de montage (12) sont reliés par une console de support (18) audit moteur (2) là où il est relié à ladite transmission (3).

8. L'assemblage selon la revendication 7, dans lequel lesdits premiers moyens de montage (12) sont montés sur ladite console de support (18) par l'intermédiaire d'organes de montage élastiques (19).
